# EUROPÄISCHE PATENTSCHRIFT

(11) **EP 2 137 036 B1**
(45) Veröffentlichungstag und Bekanntmachung des Hinweises auf die Patenterteilung: **10.10.2012**
(21) Anmeldenummer: 08707449.8
(22) Anmeldetag: 31.01.2008
(51) Int. Cl.: B60T 8/17, B60T 8/32, B60T 8/88, B60T 17/08

(54) **BREMSANLAGE UND VERFAHREN ZUM STEUERN EINER BREMSANLAGE FÜR EIN NUTZFAHRZEUG**
BRAKE SYSTEM AND METHOD FOR CONTROLLING A BRAKE SYSTEM FOR A COMMERCIAL VEHICLE
SYSTÈME DE FREINAGE ET PROCÉDÉ POUR ASSURER LA COMMANDE D'UN SYSTÈME DE FREINAGE POUR VÉHICULE UTILITAIRE

(30) Priorität: 31.01.2007 DE 102007004758
(43) Veröffentlichungstag der Anmeldung: 30.12.2009
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Schönmann, Kurt
(86) Internationale Anmeldenummer: PCT/EP2008/000760
(87) Internationale Veröffentlichungsnummer: WO 2008/092683

(56) Entgegenhaltungen:
- EP-A- 1 541 437
- EP-A- 1 571 061
- DE-A1- 10 320 608
- US-B1- 6 290 309

## Beschreibung

Die Erfindung betrifft ein Verfahren zum Steuern einer elektronischen Bremsanlage eines Nutzfahrzeugs, gemaß dem Oberbegriff des Anspruchs 1.

Weiterhin betrifft die Erfindung eine Bremsanlage für ein Nutzfahrzeug, gemaß dem Oberbegriff des Anspruchs 11.

Ein derartiges verfahren, bzw. eine derartige Bremsanlage wurde in EP-A-1571061 offenbart.

Bremsanlagen für Nutzfahrzeuge sind in der Regel mit zwei Betriebsbremskreisen ausgestattet, die der Vorderachse beziehungsweise der Hinterachse des Nutzfahrzeugs zugeordnet sind. Diese Betriebsbremskreise beziehen die für den Betrieb der Bremsanlage erforderliche Druckluft aus einem Mehrkreisschutzventil, welches verschiedene Druckluftkreise gegeneinander absichert. Neben den Betriebsbremskreisen sind dies beispielsweise die Druckluftkreise für die Feststellbremsanlage und einen Anhänger sowie Nebenverbraucherkreise. Das Mehrkreisschutzventil ist vielfach in eine elektronische Druckluftaufbereitungsanlage integriert, welche neben dem Mehrkreisschutzventil eine elektronische Steuereinheit, eine Filtereinheit und einen Druckregler als wesentliche Komponenten enthält. Erzeugt wird die Druckluft durch einen der Druckluftaufbereitungsanlage vorgelagerten Kompressor.

Die Sicherheitsanforderungen an pneumatische Bremsanlagen von Nutzfahrzeugen sind hoch. Dies betrifft insbesondere die Notwendigkeit, auf bestimmte Teilausfälle der Bremsanlage durch Gegenmaßnahmen reagieren zu können. Fällt beispielsweise ein Druckluftkreis aufgrund eines Lecks in einer Druckleitung aus, so ist es erforderlich, das Fahrzeug möglichst sicher zum Stehen zu bringen, um es dann in einer Werkstatt in Stand setzen zu können. In der Regel gelingt dies bereits aufgrund der Zweikreisigkeit der Betriebsbremsanlage.

Aufgrund erhöhter Sicherheitsanforderungen reicht es jedoch nicht aus, das Nutzfahrzeug mit beliebig geringer Bremswirkung zum Stehen zu bringen. Vielmehr muss wenigstens die sogenannte Hilfsbremswirkung, das heißt eine bestimmte Mindestverzögerung, erreicht werden.

Gängige Konzepte sehen daher vor, eine elektronische Feststellbremse des Fahrzeugs so auszustatten, dass sie eine Notbremsung im Falle des Ausfalls eines Betriebsbremskreises unterstützen kann, wobei dies von Fahrer durch Betätigen einer gestuft betätigbaren Handsteuereinheit veranlasst wird. Die elektrisch ansteuerbaren Ventileinrichtungen sind daher, neben der Entlüftungs- und der Belüftungsstufe, mit einem Regelventil ausgestattet, das dem Halten des von der Ventileinrichtung an einen Bremszylinder durchgesteuerten Druckes dient. Auf diese Weise kann ein Blockieren von Rädern, auf die eine unzureichende Normalkraft wirkt, verhindert werden. Ebenfalls ist es möglich, die elektrisch ansteuerbare Ventileinrichtung der Feststellbremse so auszustatten, dass bei Bedarf eine zusätzliche Bremswirkung zur Verfügung gestellt werden kann.

An derartigen Konzepten hat sich als nachteilig erwiesen, dass der Fahrer des Nutzfahrzeugs gefordert ist, die geeigneten Maßnahmen zum Erreichen der Hilfsbremswirkung selbst zu veranlassen. Dies kann den Fahrer unter Umständen überfordern, so dass es zu gefährlichen Fahrsituationen kommen kann.

Der Erfindung liegt die Aufgabe zugrunde, eine Bremsanlage mit einer elektronischen Feststellbremse so weiterzubilden, dass eine Notbremsung bei Bedarf in jedem Fall sicher eingeleitet wird, ohne dass Handlungen seitens des Fahrers erforderlich sind, die diesen überfordern könnten.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung besteht in einem Verfahren zum Steuern einer elektronischen Bremsanlage eines Nutzfahrzeugs, mit den Schritten: Erfassen eines Defektes durch eine erste elektronische Steuereinheit, die im Wesentlichen einem Betriebsbremssystem des Nutzfahrzeugs zugeordnet ist, und/oder durch eine zweite elektronische Steuereinheit, die im Wesentlichen einem Feststellbremssystem des Nutzfahrzeugs zugeordnet ist, wobei der Defekt zu einem mindestens teilweisen Ausfall der Betriebsbremswirkung an einer Achse, insbesondere Hinterachse, des Nutzfahrzeugs führt, Erfassen eines Bremswunsches durch eine zentrale elektronische Steuereinheit auf der Grundlage einer Betätigung eines Gebers, Empfangen eines den Bremswunsch anzeigenden elektrischen Signals durch die zweite elektronische Steuereinheit, Ansteuern einer Feststellbremsventileinrichtung durch die zweite elektronische Steuereinheit, und Unterstützen der durch den Bremswunsch veranlassten Bremsung durch einen Federspeicherzylinder des Feststellbremssystems. Auf der Grundlage eines solchen Verfahrensablaufes kann die Betriebsbremse im Fehlerfall automatisch von der Feststellbremse unterstützt werden. Die an dem Verfahren beteiligte erste elektronische Steuereinheit ist im Wesentlichen einem Betriebsbremssystemnutzfahrzeug zugeordnet, das heißt ihre wesentliche Aufgabe besteht darin, normale Betriebsbremsungen zu steuern beziehungsweise zu regeln. Eine zweite beteiligte elektronische Steuereinheit ist im selben Sinne im Wesentlichen der Feststellbremse zugeordnet. Die beiden Steuereinheiten können über Signalleitungen direkt beziehungsweise über einen Datenbus miteinander in Verbindung stehen und sich auf diese Weise funktionell unterstützen, so dass beispielsweise Ausfälle der einen elektronischen Steuereinheit durch die andere elektronische Steuereinheit ausgeglichen werden können. Neben der Verbindung der elektronischen Steuereinheit durch Signalleitungen ist es auch möglich, die beiden elektronischen Steuereinheiten in einer Einheit zu integrieren, wobei allerdings eine funktionelle Selbstständigkeit der Steuereinheiten zumindest weitgehend gegeben sein muss. Wird von einer zentralen elektronischen Steuereinheit des Nutzfahrzeugs nun im Defektfall ein Bremswunsch erfasst, so kann dies an die für das Feststellbremssystem zuständige elektronische Steuereinheit übermittelt werden. Folglich kann die Feststellbremsventileinrichtung durch die hierfür vorgesehene elektronische Steuereinheit angesteuert werden, um die erforderliche Notbremsung durch geeignetes Ansteuern der Federspeicherzylinder des Feststellbremssystems zu unterstützen und auf diese Weise das Erreichen der Hilfsbremswirkung sicherzustellen.

Beispielsweise kann das Verfahren in dem Fall besonders nützlich sein, dass der Defekt einen Druckverlust im Bremskreis der Hinterachse bewirkt. Bei einem Druckverlust im Bremskreis der Hinterachse müsste das Fahrzeug allein auf der Grundlage der auf die Vorderachse wirkenden Bremskraft zum Stehen gebracht werden. Dies reicht mitunter nicht aus, so dass eine geeignete Betätigung der der Hinterachse zugeordneten Federspeicherzylinder zu einem Erreichen der erforderlichen Hilfsbremswirkung beiträgt.

Ebenfalls ist möglich, dass der Defekt die erste elektronische Steuereinheit betrifft. Bei einem solchen Defekt der ersten elektronischen Steuereinheit wird diese vorzugsweise durch die zentrale elektronische Steuereinheit außer Wirkung gesetzt, so dass durch diese elektronische Steuereinheit keine negative Beeinflussung des Bremsvorgangs mehr erfolgen kann. Ein solches Abschalten der elektronischen Steuereinheit für die Betriebsbremsung kann auch im Falle eines Druckverlustes im Bremskreis der Hinterachse vorgenommen werden, wobei dies je nach Auslegung der Bremsanlage nicht unbedingt erforderlich ist. Beim Defekt der ersten elektronischen Steuereinheit kann die zweite elektronische Steuereinheit, die in der Regel weiterhin fehlerfrei arbeitet, die erforderliche Unterstützung der Bremswirkung durch die Federspeicherzylinder herbeiführen. In diesem Zusammenhang ist es erforderlich, dass die zweite elektronische Steuereinheit zumindest im Hinblick auf ihre die Betriebsbremsung unterstützende Funktionalität vollkommen unabhängig von der ersten elektronischen Steuereinheit arbeiten kann.

Nützlicherweise ist vorgesehen, dass der Geber ein Fußbremspedal ist. Die Unterstützung der Betriebsbremswirkung durch die Federspeicherzylinder setzt also schlicht dadurch ein, dass der Fahrer das Bremspedal betätigt und ein die Achse betreffender Defekt festgestellt wird. Es ist keine weitere Aktion des Fahrers erforderlich.

Nützlicherweise kann aber auch vorgesehen sein, dass der Geber ein erster Geber ist und ein zweiter Geber vorgesehen ist, wobei bei Betätigung des zweiten Gebers dieser gegenüber dem ersten Geber einen vorrangigen Einfluss auf die Feststellbremsventileinrichtung hat. Unter Umständen will der Fahrer die Betriebsbremswirkung gezielt durch Betätigen eines weiteren Gebers, das heißt insbesondere einer Handsteuereinheit für die Feststellbremsanlage beeinflusst, insbesondere dann, wenn er der Auffassung ist, dass durch die gezielte Betätigung eine erhöhte Sicherheit erreicht werden kann. Aus diesem Grund ist ein solcher zweiter Geber vorgesehen, und er wird von der Steuerung, mit der der zweite Geber verbunden ist, gegenüber dem ersten Geber vorrangig berücksichtigt.

Es ist von besonderem Vorteil, dass der Druckverlauf des die Bremskraft des Federspeicherzylinders steuernden Drucks von der Betätigung eines Gebers abhängt. Die Unterstützung der Bremsung durch die Federspeicherzylinder erfolgt also in keinem Fall durch ein schlagartiges Entlüften einer Druckkammer und vorzugsweise auch nicht auf der Grundlage eines vorgegebenen Druckverlaufes, sondern die Betätigung des Gebers, das heißt insbesondere des Fußbremsmoduls, bestimmt die unterstützende Wirkung der Feststellbremse.

Es ist von besonderem Vorteil, dass die erste und die zweite elektronische Steuereinheit in ein elektropneumatisches Bremsmodul für die Achse integriert sind. Das elektropneumatische Bremsmodul enthält somit einen großen Teil der elektrischen und pneumatischen Komponenten, die für die Betätigung der Betriebsbremse und der Feststellbremse sowohl im fehlerfreien als auch im fehlerhaften Betrieb benötigt werden.

Es ist von besonderem Vorteil, dass das elektropneumatische Bremsmodul bei fehlerfreiem Betrieb des Bremssystems elektrisch durch die zentrale elektronische Steuereinheit angesteuert wird. In diesem Zusammenhang ist es möglich, dass das elektropneumatische Bremsmodul zusätzlich pneumatisch angesteuert wird. Die pneumatische Ansteuerung dient als Rückfallebene für den Fall eines Defektes bei der elektronischen Ansteuerung. Dies ist nützlich aber nicht zwingend erforderlich, wenn das elektrische System hinreichend sicher ausgelegt ist. Zu diesem Zweck sollten möglicht sämtliche elektrische und elektronische Komponenten redundant ausgeführt sein. Eine gewisse Redundanz kann dadurch hergestellt werden, dass die erste und die zweite elektronische Steuereinheit sich gegenseitig funktionsmäßig ersetzen können. Weitere Redundanzmaßnahmen bestehen darin, doppelte elektrische Signal- und Versorgungsleitungsführungen so wie Stecker beziehungsweise Steckerkammern zur Verfügung zu stellen.

Nützlicherweise ist vorgesehen, dass ein Anhängersteuerventil vorgesehen ist, das einen mit einem elektronischen Steuergerät verbundenen elektrischen Steuereingang aufweist, über den eine Entlüftung der Anhängerbremsanlage zum Zwecke einer Testfunktion veranlasst wird. Eine solche Testfunktion wird herkömmlicherweise über einen pneumatischen Steuereingang realisiert. Wird ein Nutzfahrzeug auf einer Gefällestrecke geparkt, so sollte diese Testfunktion durchgeführt werden, bei der herkömmlicherweise ein pneumatischer Steuereingang des Anhängersteuerventils belüftet wird, was zur Entlüftung der Anhängerbremsanlage führt. Folglich trägt die Anhängerbremsanlage nichts zur Bremswirkung bei, und der gesamte Zug muss durch die Feststellbremsanlage des Zugfahrzeugs gehalten werden. Gelingt dies, so ist davon auszugehen, dass das Fahrzeug auch bei einem Druckabfall im Anhängerbremssystem nicht unbeabsichtigt wegrollt. Nützlicherweise ist nun vorgesehen, den pneumatischen Steuereingang durch einen elektrischen Steuereingang zu ersetzen und diesen durch eine der Steuereinheiten, insbesondere durch die zentrale Steuereinheit beziehungsweise die der elektronischen Feststellbremse zugeordnete Steuereinheit anzusteuern. Auf diese Weise wird unter grundsätzlicher Beibehaltung der Funktionalität eine pneumatische Leitung durch eine elektrische Leitung ersetzt, was zu einer Reduzierung von Kosten führt.

Die Erfindung besteht weiterhin in einer ersten elektronischen Steuereinheit, die im Wesentlichen einem Betriebsbremssystem des Nutzfahrzeugs zugeordnet ist, und einer zweiten elektronischen Steuereinheit, die im Wesentlichen einem Feststellbremssystem des Nutzfahrzeugs zugeordnet ist, zum Erfassen eines Defektes durch die erste elektronische Steuereinheit und/oder durch die zweite elektronische Steuereinheit, wobei der Defekt zu einem mindestens teilweisen Ausfall der Betriebsbremswirkung an einer Achse, insbesondere Hinterachse, des Nutzfahrzeugs führt, einem Geber, über dessen Betätigung ein Bremswunsch durch eine zentrale elektronische Steuereinheit erfassbar ist, wobei die zweite elektronische Steuereinheit dazu geeignet ist, ein den Bremswunsch anzeigendes elektrischen Signals zu empfangen und eine Feststellbremsventileinrichtung anzusteuern und wobei eine durch den Bremswunsch veranlasste Bremsung durch einen Federspeicherzylinder des Feststellbremssystems unterstützt werden kann. Auf diese Weise werden die Vorteile und Besonderheiten des erfindungsgemäßen Verfahrens auch im Rahmen einer Bremsanlage umgesetzt. Dies gilt auch für die nachfolgend angegebenen besonders bevorzugten Ausführungsformen der erfindungsgemäßen Bremsanlage.

Diese kann in dem Fall nützlich zum Einsatz kommen, dass der Defekt einen Druckverlust im Bremskreis der Achse bewirkt.

Weiterhin kann die Bremsanlage auch dafür vorgesehen sein, dass der Defekt die erste elektronische Steuereinheit betrifft.

Nützlicherweise ist vorgesehen, dass der Geber ein Fußbremspedal ist.

Es ist ferner zu bevorzugen, dass der Geber ein erster Geber ist und ein zweiter Geber vorgesehen ist, wobei bei Betätigung des zweiten Gebers dieser gegenüber dem ersten Geber einen vorrangigen Einfluss auf die Feststellbremsventileinrichtung hat.

Die erfindungsgemäße Bremsanlage ist weiterhin in nützlicher Weise so ausgebildet, dass der Druckverlauf des die Bremskraft des Federspeicherzylinders steuernden Drucks von der Betätigung eines Gebers abhängt.

Von besonderem Vorteil ist, dass die erste und die zweite elektronische Steuereinheit in ein elektropneumatisches Bremsmodul für die Achse integriert sind.

Weiterhin kann vorgesehen sein, dass das elektropneumatische Bremsmodul bei fehlerfreiem Betrieb des Bremssystems elektrisch durch die zentrale elektronische Steuereinheit ansteuerbar ist.

Von weiterem Vorteil kann sein, dass das elektropneumatische Bremsmodul zusätzlich pneumatisch ansteuerbar ist.

Die erfindungsgemäße Bremsanlage kann weiterhin so ausgebildet sein, dass ein Anhängersteuerventil vorgesehen ist, das einen mit einem elektronischen Steuergerät verbundenen elektrischen Steuereingang aufweist, über den eine Entlüftung der Anhängerbremsanlage zum Zwecke einer Testfunktion veranlassbar ist.

Die vorliegende Erfindung zeigt ihren Nutzen besonders dann, wenn der Steuereinrichtung beispielsweise für die Bremsung der Hinterachse nur Vorratsdruck des Hinterachskreises zugeführt wird, d.h. kein Steuerdruck vom Betriebsbremsventil, so dass durch das EBS keine pneumatische Rückfallebene ("Backup") für die Bremsumg der Hinterachse vorgesehen ist. Bei Fahrzeugen mit mehr als einer Hinterachse ist eine solche EBS-Version ohne Backup nicht zulässig, da es nicht möglich ist, ein beladenes dreiachsiges Fahrzeug bei Kreisdefekt der Hinterachse im Rahmen des geforderten Abbremsverhaltens zum Stehen zu bringen. Eine EBS-Version ohne ein solches Backup wird nur ermöglicht, wenn dann die Feststellbremse zur Unterstützung der Betriebsbremsung verwendet wird und der Federspeicher parallel während des Einbremsens der Vorderachse entlüftet wird. Es ist außerdem hilfreich dass das Entlüften so dosiert wird, dass ein Blockieren der Räder verhindert wird. Durch das Erfassen der Raddrehzahl mit den Raddrehzahlsensoren kann das Bremsen des Rades mit der Feststellbremse geregelt werden, so dass bei einer Radblockierneigung der Federspeicherentlüftungsvorgang gestoppt wird oder diese kurz belüftet wird bis sich das Rad wieder dreht. Da nicht jedes Rad immer eine eigene Feststellbremsventileinrichtung hat und die Räder achsweise zugeordnet sind, bestimmt das Rad mit dem größten Schlupf zur Straße das Druckniveau, welches in den Federspeicherzylinder ausgesteuert wird. Im dem Fall, dass jedem Rad eine Feststellbremsventileinrichtung zugeordnet ist, kann dieser Regelvorgang individuell erfolgen. Die zentrale elektronische Steuereinheit kommuniziert mit einem Vorderachsmodul, welches die Betriebsbremszylinder der Vorderachse steuert bzw. regelt, und mit dem elektropneumatischen Bremsmodul für die Hinterachse, d.h. dem Hinterachsmodul, über den seriellen CAN-Kommunikationsbus. Weiterhin kommunizieren das Vorderachsmodul und das Hinterachsmodul auch direkt miteinander über den CAN-Bus, um Informationen auszutauschen und sich somit gegenseitig die wichtigsten Daten zu dem Zweck zu übermitteln, dass die Räder im Bedarfsfall entsprechend dem Fahrerwunsch und der Fahrzeugsituation eingebremst werden. Im Falle eines CAN-Leitungsbruches können dann die Steuergeräte über die restliche CAN-Ringleitung noch miteinander kommunizieren. Um die Fahrzeugdaten, wie die Fahrzeuggeschwindigkeit, den Beladungszustand, Motordaten, Antriebsstrangdaten und Anhängerdaten in die Bremsregelvorgänge mit einzubeziehen, hat das zentrale elektronische Steuergerät noch eine Anschlussleitung zum Fahrzeug-CAN.

Die Erfindung wird nun mit Bezug auf die begleitenden Zeichnungen anhand besonders bevorzugter Ausführungsformen beispielhaft erläutert.

Es zeigen:
- Figur 1: eine schematische Darstellung einer erfindungsgemäßen Bremsanlage;
- Figur 2: eine erste Ausführungsform einer Feststellbremsventileinrichtung zur Verwendung in einer erfindungsgemäßen Bremsanlage;
- Figur 3: eine zweite Ausführungsform einer Feststellbremsventileinrichtung zur Verwendung in einer erfindungsgemäßen Bremsanlage;
- Figur 4: eine dritte Ausführungsform einer Feststellbremsventileinrichtung zur Verwendung in einer erfindungsgemäßen Bremsanlage;
- Figur 5: eine vierte Ausführungsform einer Feststellbremsventileinrichtung zur Verwendung in einer erfindungsgemäßen Bremsanlage;
- Figur 6: eine schematische Darstellung der Kopplung von Komponenten der Bremsanlage mit elektronischen Steuereinheiten; und
- Figur 7: ein Flussdiagramm zur Erläuterung eines erfindungsgemäßen Verfahrens.

Bei der nachfolgenden Beschreibung der Zeichnungen bezeichnen gleiche Bezugszeichen gleiche oder vergleichbare Komponenten.

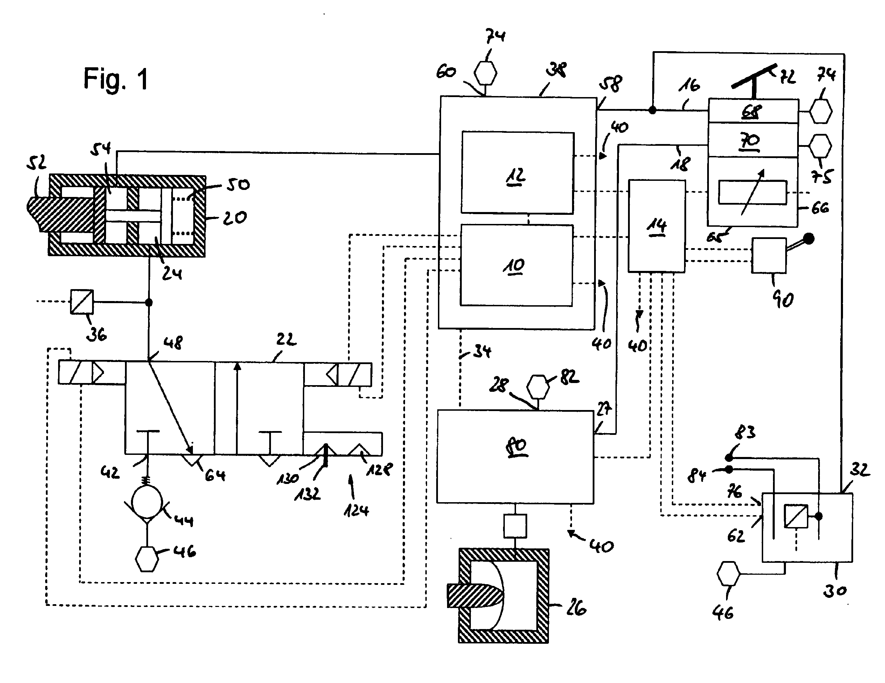

Figur 1 zeigt eine erste Ausführungsform einer erfindungsgemäßen Bremsanlage. Druckluftleitungen sind durchgezogen dargestellt, während elektrische Leitungen durch unterbrochene Linien gezeigt sind. Die Bremsanlage enthält drei elektronische Steuereinheiten 10, 12, 14 die über Schnittstellen direkt und/oder über einen Datenbus (CAN-Bus) 40 miteinander in Verbindung stehen. Bei der ersten elektronischen Steuereinheit 10 handelt es sich um die elektronische Steuereinheit für ein elektronisches Feststellbremssystem. Die zweite elektronische Steuereinheit 12 ist die elektronische Steuereinheit für ein elektronisches Bremssystem (EBS) und im Wesentlichen der Betriebsbremse zugeordnet. Die dritte elektronische Steuereinheit 14 ist eine zentrale Steuereinheit, die beispielsweise im Zusammenhang mit einem Fahrzeugführungsrechner realisiert sein kann.

Weiterhin ist eine Feststellbremsventileinrichtung 22 vorgesehen, die als vorgesteuertes bistabiles 3/2-Wegeventil realisiert ist. Diese Feststellbremsventileinrichtung 22 wird ebenfalls von der elektronischen Steuereinheit 10 für das Feststellbremssystem angesteuert. Um die Stabilität der Feststellbremsventileinrichtung 22 in ihren jeweiligen Schaltzuständen zu unterstützen, ist ein Riegelmechanismus 124 vorgesehen. Die Verriegelung kann beispielsweise über einen Stift 132 erfolgen, der in den Schaltzuständen der Feststellbremsventileinrichtung entsprechende Ausnehmungen 130, 128 eingreift. Der Riegelmechanismus 124 ist ebenfalls durch die elektronische Steuereinheit 10 steuerbar. Die Feststellbremsventileinrichtung 22 weist einen Drucklufteingang 42 auf, dem über ein Rückschlagventil 44 Druckluft zuführbar ist. Diese Druckluft wird einem Vorrat entnommen und beispielsweise über einen Druckluftausgang 46 einer Druckluftaufbereitungsanlage zur Verfügung gestellt. Die Feststellbremsventileinrichtung 22 weist weiterhin einen Ausgang 48 auf, der mit einer Druckkammer 24 eines Feststellbremszylinders 20 in Verbindung steht. Im dargestellten Schaltzustand der Feststellbremsventileinrichtung 22 wird die Druckkammer 24 über einen Entlüftungsausgang 64 der Feststellbremsventileinrichtung 22 entlüftet, während im anderen Schaltzustand eine Belüftung der Druckkammer 24 erfolgt. An den Ausgang 48 ist weiterhin ein Drucksensor 36 gekoppelt, wobei dessen Informationen von der elektronischen Steuereinheit 10 zur Überwachung der Feststellbremsventileinrichtung 22 und des Feststellbremszylinders 20 verarbeitet werden. Der Feststellbremszylinder 20 weist eine mit einer Feder 50 ausgestattete Federspeichereinheit auf. Im entlüfteten Zustand der Druckkammer 24 rückt die Federkraft einen Zylinderkolben 52 des den Federspeicher beherbergenden Kombizylinders aus, während im belüfteten Zustand der Druckkammer 24 die Feder 50 komprimiert wird und der Kolben 52 einrückt. Der Kombizylinder hat weiterhin eine Betriebsbremseinheit mit einer weiteren Druckkammer 54. Diese Druckkammer 54 kann unter Vermittlung des elektropneumatischen Bremsmoduls 38 be- beziehungsweise entlüftet werden, wodurch ein Ausrücken beziehungsweise Einrücken des Zylinderkolbens 52 bewirkt werden.

Der pneumatische Steuereingang 58 des elektropneumatischen Bremsmoduls 38 steht mit einem Fußbremsmodul 65 in Verbindung. Dieses umfasst ein Elektronikmodul 66, ein Hinterachsmodul 68 und ein Vorderachsmodul 70. Bei Betätigung eines mit dem Fußbremsmodul 65 in Verbindung stehenden Pedals 72 werden sowohl das Elektronikmodul 66 als auch das Hinterachsmodul 68 und das Vorderachsmodul 70 betätigt. Das Elektronikmodul 66 liefert ein entsprechendes Signal an die elektronische Steuereinheit 14 des elektronischen Bremssystems, so dass von dieser, vermittelt durch ihre Kopplung zu dem elektropneumatischen Bremsmodul 38 und zu eventuell weiteren nicht dargestellten Bremsmodulen, eine Bremsung durch Belüften der Druckkammer 54 des dargestellten und weiterer Kombizylinder elektrisch veranlasst werden kann.

Die für die Bremsung benötigte Druckluft wird über den Versorgungseingang 60 in das elektropneumatische Bremsmodul 38 eingesteuert, wobei diese Druckluft einem Ausgang 74 von beispielsweise einer Druckluftversorgungseinrichtung entnommen wird. Druckluft aus diesem Druckluftvorrat 74 wird auch vom Hinterachsmodul 68 bei Betätigung des Pedals 72 an den Steuereingang 58 des elektropneumatischen Bremsmoduls 38 durchgesteuert, um auf diese Weise zusätzlich zur elektrisch veranlassten Bremsung einen Steuerbefehl auf pneumatischer Ebene zur Verfügung zu stellen. Der Druck in der mit dem Ausgang 74 der Druckluftversorgungseinrichtung in Verbindung stehenden Leitung wird durch einen (nicht dargestellten) Drucksensor überwacht. Bei Betätigung des Pedals 72 kann somit, vermittelt durch das Elektronikmodul und/oder das Hinterachsmodul 68 sowie das elektropneumatische Bremsmodul 38, die Druckkammer 54 des Kombizylinders über die Leitung 78 belüftet werden, wodurch eine Bremsung der Hinterachse erfolgt.

Der Vorderachse des Nutzfahrzeugs ist ein Betriebsbremszylinder 26 zugeordnet. Auch dieser wird durch die Betätigung des Bremspedals 72 unter Vermittlung des Vorderachsmoduls 70 und/oder des Elektronikmoduls 66 belüftet. Zu diesem Zweck ist ein Bremssteuermodul 80 vorgesehen, dem Steuerdruck von dem Vorderachsmodul 70 und Versorgungsdruck von einem weiteren Ausgang 82 einer Druckluftversorgungseinrichtung über Eingänge 27, 28 zugeführt werden. Der Druckluftkreis 18 für die Vorderradachse wird über einen weiteren Druckluftausgang 75 der Druckluftversorgungseinrichtung versorgt. Das Bremssteuermodul 80 kann ähnlich ausgebildet sein wie das elektropneumatische Bremsmodul 38. Insbesondere steht es über eine Steuerleitung mit der zentralen elektronischen Steuerung 14 für das elektrische Bremssystem in Verbindung, um auch unter Vermittlung des Betriebsbremszylinders 26 auch an der Vorderachse eine elektronische Bremsung mit pneumatischer Rückfallebene zu ermöglichen. Das Bremssteuermodul 80 steht auch mit dem CAN-Bus 40 in Verbindung. Zusätzlich kann eine direkte Verbindung zu dem elektropneumatischen Bremsmodul 38 über eine elektrische Leitung 34 vorliegen.

Es ist weiterhin ein Anhängersteuerventil 30 gezeigt. Dieses hat einen pneumatischen Eingang 32 und zwei elektrische Eingänge 62, 76. Weiterhin steht es mit einem Versorgungsausgang 46 der Druckluftversorgungseinrichtung in Verbindung, der üblicherweise von dem selben Vorrat versorgt wird, wie der mit dem Ausgang 46 für die Versorgung der Feststellbremsanlage und über den im vorliegenden Fall die Feststellbremsventileinrichtung 22 mit Druckluft versorgt wird. Weiterhin sind ein Versorgungsanschluss 83 und ein Steueranschluss 84 für die Anhängerbremsanlage vorgesehen. Die dargestellte Ansteuerung des Anhängersteuerventils 30 mit einem pneumatischen 32 und zwei elektrischen Eingängen 62, 76 ist beispielhaft. Herkömmliche Anhängersteuerventile haben drei pneumatische Eingänge, wobei zwei dieser Eingänge den Betriebsbremskreisen zugeordnet und der dritte Eingang eine Testfunktion realisieren kann. Diese Testfunktion dient dazu, die Bremsanlage des Anhängers zu entlüften, um so zu erproben, ob der gesamte Zug allein durch die Feststellbremse des Zugfahrzeugs gehalten werden kann. Im vorliegenden Fall ist nun weiterhin ein Steuereingang 32 vorgesehen, der von dem Hinterachsmodul 68 des Fußbremsmoduls 65 angesteuert wird, während der herkömmlicherweise dem Bremskreis für die Vorderachse zugeordnete Steuereingang durch einen elektrisch modulierbaren Steuereingang 62 ersetzt ist. Ebenso ist der Steuereingang für die Testfunktion ein elektrischer Steuereingang 76. Auf diese Weise werden pneumatische Leitungen eingespart. Ebenfalls wäre es möglich, anders als bei dem dargestellten Beispiel, in beliebiger Kombination zwei pneumatische Steuereingänge und einen elektrischen Steuereingang vorzusehen oder alle Steuereingänge elektrisch auszugestalten.

Die dargestellte Bremsanlage enthält weiterhin eine Handsteuereinheit 90. Diese ist im vorliegenden Beispiel mit der zentralen elektronischen Steuereinheit 14 verbunden. Ebenfalls ist es möglich, die Handsteuereinheit 90 direkt mit der dem Feststellbremssystem zugeordneten Steuereinheit 10 zu verbinden.

Die Figur 1 dargestellte Bremsanlage arbeitet im Hinblick auf einen Defekt wie folgt: Fällt die in das elektropneumatische Bremsmodul 38 integrierte elektronische Steuereinheit 12 aus, so wird diese von der zentralen elektronischen Steuereinheit 14 in einen sicheren Zustand überführt beziehungsweise vollständig abgeschaltet. Da das elektropneumatische Bremsmodul 38 einen pneumatischen Steuereingang 58 aufweist, kann über die pneumatische Rückfallebene weiterhin eine Bremswirkung auf die Hinterachse durch Belüften der Druckkammer 54 herbeigeführt werden. Liegt jedoch ein Kreisdefekt vor, was über einen nicht dargestellten Drucksensor stromaufwärts oder stromabwärts von dem Hinterachsmodul 68 erfasst werden kann, so kann die Betriebsbremse keine Bremswirkung auf die Hinterachse mehr herbeiführen. In diesem Fall wird durch die zentrale elektronische Steuereinheit 14 die elektronische Steuereinheit 10 des Feststellbremssystems dazu veranlasst, eine unterstützende Wirkung der Bremsung durch Ansteuerung der Feststellbremsventileinrichtung herbeizuführen. Dies gelingt durch gestuftes Entlüften der Druckkammer 24, wobei eine gestufte Entlüftung für den Fall des hier als 3/2-Wegeventils ausgelegten Feststellbremsventils 22 durch Pulsweitenmodulation der Ansteuersignale erreicht werden kann. Die Betätigung des Pedals 72 reicht also aus, um die unterstützende Wirkung der Feststellbremsanlage herbeizuführen. Betätigt der Fahrer allerdings parallel die Handsteuereinheit 90, so werden deren Ausgangssignale durch die zentrale elektronische Steuereinheit 14 oder, wenn die Handsteuereinheit 90 an die elektronische Steuereinheit 10 des Feststellbremssystems angeschlossen ist, durch diese vorrangig berücksichtigt. Der Fahrer kann also, wie im herkömmlichen Fall, die Bremsung gezielt durch die gestufte Handsteuereinheit 90 in einer von ihm gewünschten Weise beeinflussen.

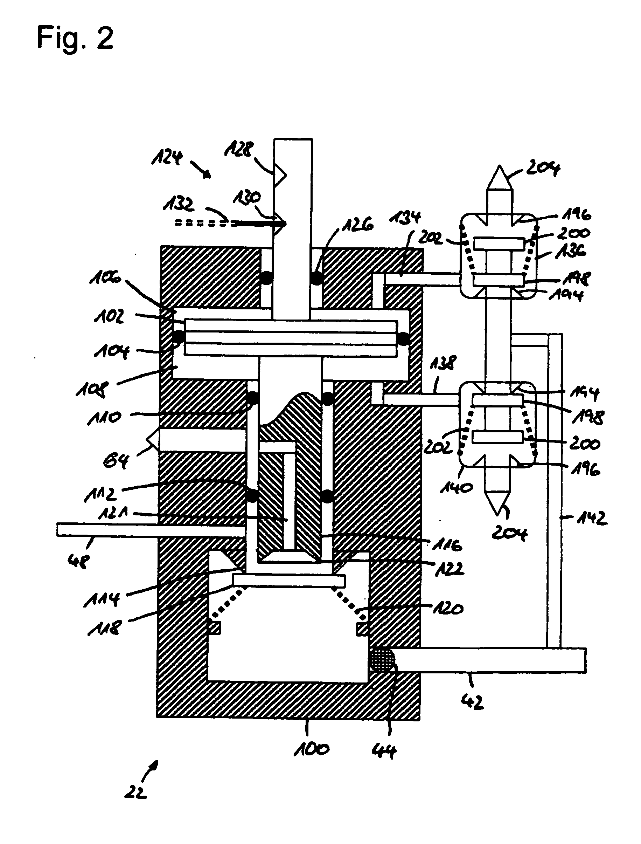

Figur 2 zeigt eine erste Ausführungsform einer Feststellbremsventileinrichtung zur Verwendung in einer erfindungsgemäßen Bremsanlage. Die in Schnittansicht dargestellte Feststellbremsventileinrichtung 22 weist ein Ventilgehäuse 100 auf, in dem Elemente zur Darstellung eines 3/2-Wegeventils angeordnet sind. Eine Steuerkolbenplatte 102, die über eine Dichtung 104 mit dem Gehäuse 100 zusammenwirkt, trennt zwei Steuerkammern 106, 108 voneinander. Von der Steuerkolbenplatte erstreckt sich durch einen Steuerraum 108 ein Steuerkolben 116, der über zwei Dichtungen 110, 112 mit dem Ventilgehäuse 100 zusammenwirkt. Zwischen den Dichtungen 110, 112 weist das Gehäuse 100 eine Entlüftungsöffnung 64 (vergleiche Figur 1) auf. Das der Steuerkolbenplatte abgewandte Ende des Steuerkolbens 116 ragt in einen mit einem Druckluftausgang 48 (vergleiche Figur 1) versehenen Ventilraum. Dieser Ausgang 48 wird durch einen mit einem Ventilsitz 114 zusammenwirkenden Ventilteller von einem Drucklufteingang 42 (vergleiche Figur 1) getrennt, wobei der Ventilteller 118 durch eine sich an dem Gehäuse 100 abstützende Feder 120 auf den Ventilsitz 114 gepresst wird. Der Steuerkolben 116 hat einen Kanal 121, der den Raum zwischen den Dichtungen 110, 112 im dargestellten Zustand mit dem dem Ventilteller 118 zugewandten Raum verbindet. Das der Steuerkolbenplatte 102 abgewandte Ende des Steuerkolbens 116 hat einen Ventilsitz 122, der mit dem Ventilteller 118 den Kanal 121 abdichtend zusammenwirken kann. An der dem Steuerkolben 116 abgewandten Seite der Steuerkolbenplatte 102 steht diese mit einer Verriegelungseinrichtung 124 in Verbindung, die mittels einer Dichtung 126 den anschließenden Steuerraum 106 gegen die Atmosphäre abdichtet. Die Verriegelungseinrichtung 124 hat zwei Ausnehmungen 128, 130, wobei in eine Ausnehmung ein Stift 132 eingreift und auf diese Weise die Position des Steuerkolbens 116 fixiert. Der erste Steuerraum 106 steht über eine Steuerleitung 134 mit einem ersten Magnetventil 136 in Verbindung, das als 3/2-Wegeventil ausgelegt ist. Der zweite Steuerraum 108 steht über eine Steuerleitung 138 mit einem identisch oder vergleichbar aufgebauten zweiten Magnetventil 140 in Verbindung. Die Magnetventile 136, 140 werden über eine Versorgungsleitung 142 mit Druckluft versorgt, wobei diese von der den Eingang 42 (vergleiche Figur 1) der Feststellbremsventileinrichtung versorgenden Leitung abzweigt. Die Magnetventile 136, 140 sind außerhalb des Ventilgehäuses 100 dargestellt. Ebenfalls ist möglich, dass diese in das Ventilgehäuse 100 integriert sind. Jedes der Magnetventile 136, 140 hat zwei Ventilsitze 194, 196, zugehörige Ventilteller 196, 200 und eine Feder 202 (vergleiche Figur 1). Am Eingang 42 der Festsstellbremsventileinrichtung 22 ist ein Rückschlagventil 44 dargestellt. Dieses kann auch, wie beispielsweise in Figur 1 dargestellt, extern vorgesehen sein.

Das Ventil gemäß Figur 2 arbeitet wie folgt: Im dargestellten Zustand sind der Ausgang der Feststellbremsventileinrichtung 22 und die Entlüftung 64 über den Kanal 121 miteinander verbunden. Dieser Zustand wird durch die Verriegelungseinrichtung 124 gesichert. Jedes der Magnetventile 136, 140 hat zwei Ventilsitze 194, 196, zugehörige Ventilteller 196, 200 und eine Feder 202 (vergleiche Figur 1). Im unbestromten Zustand der Magnetventile 136, 140 presst die Feder 202 den Ventilteller 198 auf den zugehörigen Ventilsitz 194, so dass die Steuerleitungen 134, 138 über die Entlüftungen 204 der Magnetventile entlüftet sind. Um einen der Steuerräume 106, 108 zu belüften, wird das zugehörige Magnetventil 136, 140 bestromt, so dass unter Kompression der Feder 202 der Ventilteller 200 auf dem Ventilsitz 194 aufsetzt, während die Druckluftverbindung zwischen der Versorgungsleitung 142 und dem jeweiligen Steuerraum 106, 108 freigegeben wird. Soll die Feststellbremsventileinrichtung 22 umgeschaltet werden, so wird das Magnetventil 136 kurzzeitig bestromt. Folglich wird der Steuerraum 106 belüftet, so dass der Ventilsitz 122 des Steuerkolbens 116 abdichtend mit dem Ventilteller 118 zusammenwirkt und diesen von dem Ventilsitz 114 abhebt. In diesem Zustand steht der Eingang 42 mit dem Ausgang 48 in Verbindung (vergleiche Figur 1). Auch dieser Zustand kann durch das Eingreifen des Stiftes 132 in die Ausnehmung 128 gesichert werden. Das Magnetventil 136 kann insofern wieder in seinen stromlosen Zustand überführt werden. Soll erneut umgeschaltet werden, so wird das Magnetventil 140 bestromt, was die Feststellbremsventileinrichtung 22 wieder in ihre dargestellte Position übeführt. Grundsätzlich kann die Verriegelung der Feststellbremsventileinrichtung 22 aktiv erfolgen, das heißt von der elektronischen Steuereinheit beeinflusst, indem diese den Stift 132 ein- oder ausrückt. Ebenfalls ist eine passive Verriegelung denkbar, die die Position des Steuerkolbens zwar jeweils sichert, wobei der in diesem Fall elastisch vorgespannte Stift jedoch aus der Ausnehmung herausgleitet, wenn eine ausreichende Kraft in axiale Richtung auf den Steuerkolben und somit auf die Verriegelungseinrichtung aufgebracht wird. Die für den zum Bremswertgeber proportionalen Eingriff der Feststellbremsanlage erforderliche Stufbarkeit der Feststellbremsventileinrichtung 22 wird durch eine pulsweitenmodulierte Ansteuerung derselben realisiert. Dies kann insbesondere so erfolgen, dass die Magnetventile 136, 140 abwechselnd bestromt werden. Das System kann so ausgelegt sein, dass bei gleichen Bestromungsperiodendauern der Magnetventile 136, 140 der Druck am Ausgang 48 und damit in der Druckkammer 24 des Federspeichezylinders im Wesentlichen gehalten wird. Wird die Bestromungsdauer des Magnetventils 136 zu ungunsten der Bestromungsdauer des Magnetventils 140 erhöht, so erfolgt ein Druckaufbau. Im umgekehrten Fall, das heißt wenn das Magnetventil 140 länger bestromt wird als das Magnetventil 136, erfolgt ein Druckabbau.

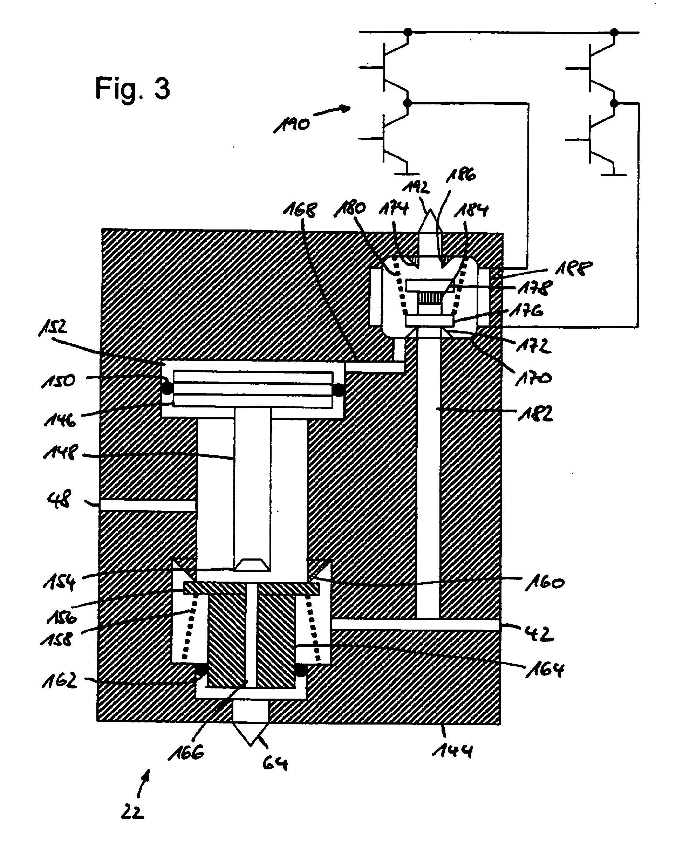

Figur 3 zeigt eine zweite Ausführungsform einer Feststellbremsventileinrichtung zur Verwendung in einer erfindungsgemäßen Bremsanlage. Die Feststellbremsventileinrichtung 22 umfasst ein Ventilgehäuse 144. Dieses enthält einen Drucklufteingang 42, einen Druckluftausgang 48 und eine Entlüftung 64 (vergleiche Figur 1). In dem Ventilgehäuse 144 ist ein mit einer Steuerkolbenplatte 146 ausgestatteter Steuerkolben 148 vorgesehen. Eine Dichtung 150, die mit der Steuerkolbenplatte 146 und dem Ventilgehäuse 144 zusammenwirkt, dichtet einen Steuerraum 152 gegen einen Raum ab, der mit dem Ausgangsanschluss 48 verbunden ist. Das der Steuerkolbenplatte 146 zugewandte Ende des Steuerkolbens 148 weist einen Ventilsitz auf, der mit einem Ventilteller 156 zusammenwirken kann. Der Ventilteller 156 wird durch eine Feder 158, die sich an dem Gehäuse 144 abstützt, auf einen weiteren Ventilsitz 160 gepresst. Der Ventilteller 156 ist an seiner dem Steuerkolben 148 abgewandten Seite mit einem Zylinder 164 ausgestattet. Der Zylinder 164 wirkt über eine Dichtung 162 mit dem Gehäuse 144 zusammen, so dass der die Feder 158 beherbergende Raum, der auch mit dem Drucklufteingang 42 in Verbindung steht, gegen die Entlüftung 64 abgedichtet ist. Der Ventilteller 156 und der Zylinder 164 weisen einen Kanal 166 auf, der dann, wenn der Ventilsitz 160 von dem Ventilteller 156 abgehoben ist, den Druckluftausgang 48 mit der Entlüftung 64 verbindet. Der Steuerraum 152 steht über eine Steuerleitung 168 mit einem bistabilen Magnetventil 170 in Verbindung. Das Magnetventil ist als 3/2-Wegeventil ausgestattet. Es enthält zwei Ventilsitze 172, 174 und zwei zugehörige miteinander in Verbindung stehende Ventilteller 176, 178. Der Ventilsitz 174 dient der Abdichtung einer Entlüftung 192. Ferner ist eine Feder 180 vorgesehen, die den Ventilteller 178 auf den Ventilsitz 172 presst, um so eine Versorgungsleitung 182, die mit dem Drucklufteingang 42 in Verbindung steht, gegen die mit dem Steuerraum 152 in Verbindung stehende Steuerleitung 168 abzudichten. Weiterhin sind Permanentmagnete 184, 186 vorgesehen. Ein Permanentmagnet 184 ist zusammen mit den Ventiltellern 176, 178 beweglich. Der andere Permanentmagnet 186 ist fest mit dem Ventilgehäuse 144 verbunden. Beispielsweise ist der fest mit dem Ventilgehäuse 144 verbundene Permanentmagnet 186 in den Ventilsitz 174 integriert. Die Permanentmagnete 184, 186 sind im Hinblick auf ihre Polung so angeordnet, dass sie sich anziehen. Eine Spule 188 des Magnetventils 170 wird von einer Transistorschaltung 190 angesteuert, so dass die Stromrichtung durch die Spule 188 umkehrbar ist.

Die Feststellbremsventileinrichtung 22 gemäß Figur 3 arbeitet wie folgt: Der dargestellte Zustand kann bei stromloser Magnetspule 188 vorliegen, indem nämlich die Feder 180 eine ausreichende Kraft aufbringt, um den Ventilteller 176 abdichtend auf seinen Sitz 172 zu pressen. Folglich ist der Steuerraum 152 entlüftet, und der Druckluftausgang 48 steht über dem Kanal 166 ebenfalls mit der Entlüftung 64 in Verbindung. Andererseits sitzt der Ventilteller 156 auf seinem Ventilsitz 160 auf, so dass der Drucklufteingang 42 nicht mit dem Druckluftausgang 48 in Verbindung steht. Zum Umschalten der bistabilen Feststellbremsventileinrichtung 22 wird die Magnetspule mit einer derart gepolten Spannung versorgt, dass aufgrund der Stromrichtung in der Magnetspule der Ventilteller 178 auf den Ventilsitz 174 gepresst wird. Aufgrund der Annäherung der Permanentmagnete 184, 186 erreicht die anziehende Magnetkraft einen Wert, der die Federkraft übersteigt. Wenn der Ventilteller 178 auf dem Ventilsitz 174 aufsitzt, kann die Magnetspule 188 in einen stromlosen Zustand überführt werden, wobei die die Entlüftung 192 abdichtende Stellung aufgrund der Magnetkraft beibehalten wird. Folglich steht die Versorgungsleitung 182 über die Steuerleitung 168 mit dem Steuerraum 152 in Verbindung, wodurch der Steuerkolben 148 mit seinem Ventilsitz 154 auf den Ventilteller 156 aufsetzt. Hierdurch wird der Druckluftausgang 48 von der Entlüftung 64 getrennt. Weiterhin hebt durch die Stößelwirkung des Steuerkolbens 148 der Ventilteller 156 von seinem Ventilsitz 160 ab, und der Eingangsanschluss 42 wird mit dem Ausgangsanschluss 48 verbunden. Um die Feststellbremsventileinrichtung 22 erneut umzuschalten, ist eine erneute Bestromung der Magnetspule erforderlich, allerdings nun mit umgekehrten Vorzeichen. Die so mit der Federkraft und der durch die Magnetkraft des Spulenfeldes aufgebrachte Kraft übersteigt dann die Magnetkraft der Permanentmagnete, so dass die Ventilteller 156, 178 wieder in ihren dargestellten Zustand überführt werden. Die Bistabilität der Feststellbremsventileinrichtung 22 gemäß Figur 3 wird demnach durch das bistabile Magnetventil 170 realisiert. Die für den zum Bremswertgeber proportionalen Eingriff der Feststellbremsanlage erforderliche Stufbarkeit der Feststellbremsventileinrichtung 22 wird durch eine pulsweitenmodulierte Ansteuerung derselben realisiert. Eine Pulsweitenmodulation bewirkt in diesem Fall ein periodisches Umschalten der Stromrichtung, wobei hier durch das Verhältnis der Zeitperioden für die jeweiligen Stromrichtungen bestimmt wird, ob ein Belüften, ein Halten oder ein Entlüften des Druckluftausgangs 48 und damit der Druckkammer 24 des Federspeicherzylinders erfolgt.

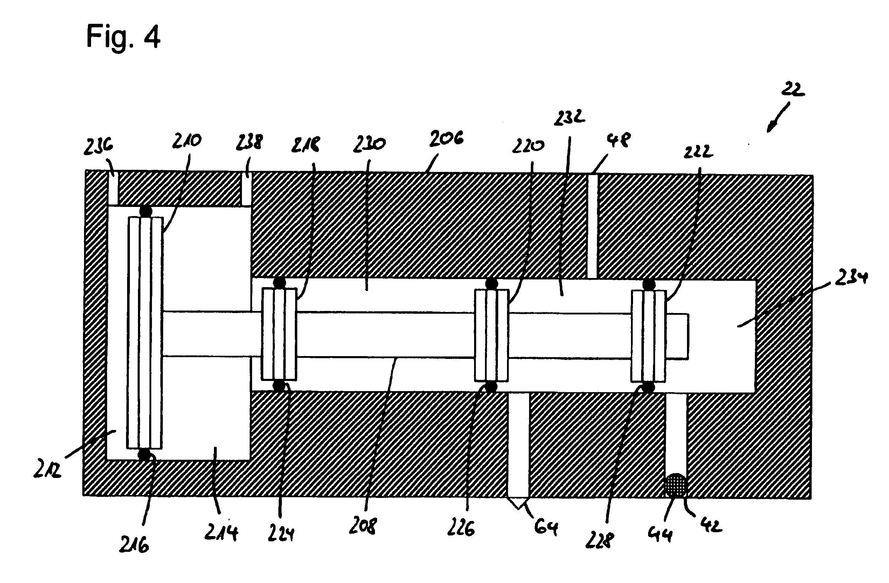

Figur 4 zeigt eine dritte Ausführungsform einer Feststellbremsventileinrichtung zur Verwendung in einer erfindungsgemäßen Bremsanlage. Die Feststellbremsventileinrichtung 22 weist ein Ventilgehäuse 206 auf, in dem ein in Schieberbauweise realisierter Steuerkolben 208 angeordnet ist. Der Steuerkolben weist an seinem einen Ende eine Steuerkolbenplatte 210 auf, die zwei Steuerräume 212, 214 unter Vermittlung einer mit der Steuerkolbenplatte 210 und dem Ventilgehäuse 206 zusammenwirkenden Dichtung 216 gegeneinander abdichtet. Weiterhin hat der Steuerkolben 208 drei Verdickungen 218, 220, 222, die jeweils über Dichtungen 224, 226, 228 mit dem Ventilgehäuse 206 zusammenwirken. Die erste Verdickung 218 dient der Abdichtung des Steuerraums 214 gegen eine erste Ventilkammer 230. Die zweite Verdickung 220 dichtet die Ventilkammer 230 gegen eine zweite Ventilkammer 232 ab, und die dritte Verdickung 222 ist zum Zwecke der Abdichtung der zweiten Ventilkammer 232 gegen eine dritte Ventilkammer 234 vorgesehen. An die Steuerräume 212, 214 schließen jeweils Steuerleitungen 236, 238 an. Diese Steuerleitungen 236, 238 stehen mit zwei nicht dargestellten monostabilen Magnetventilen in Verbindung, wie es bereits im Zusammenhang mit Figur 2 erläutert wurde. Im vorliegenden Beispiel ist das Rückschlagventil 44 (vergleiche Figur 1) wiederum in die Feststellbremsventileinrichtung 22 integriert.

Die Feststellbremsventileinrichtung 22 gemäß Figur 4 arbeitet wie folgt. Im dargestellten Zustand stehen der Druckluftausgang 48 und die Entlüftung 64 miteinander in Verbindung, während der Drucklufteingang 42 von dem Druckluftausgang 48 getrennt ist (vergleiche Figur 1). Dieser Zustand der Feststellbremsventileinrichtung ist aufgrund der durch die Vielzahl von Dichtungen vermittelten hohen Reibung stabil. Insbesondere kann der Steuerkolben 208 nicht aufgrund anderer Einflüsse als durch Druckluft, beispielsweise Rütteln oder Stoßen, verschoben werden. Zum Umschalten der Feststellbremsventileinrichtung wird der Steuerraum 212 mit Druck beaufschlagt, so dass sich der Steuerkolben 208 verschiebt. Dies hat zur Folge, dass der Druckluftausgang 48 nun mit dem Drucklufteingang 42 in Verbindung steht und nicht mehr mit der Entlüftung 64 (vergleiche Figur 1). Nach dem Verschieben des Steuerkolbens 208 kann die Druckbeaufschlagung des Steuerraums 212 beendet werden, da dieser Schaltzustand der Feststellbremsventileinrichtung 22 wiederum durch Reibung stabil ist. Zum erneuten Umschalten der Feststellbremsventileinrichtung 22, um wieder den dargestellten Zustand zu erreichen, wird der Steuerraum 214 kurzzeitig mit Druck beaufschlagt. Die für den zum Bremswertgeber proportionalen Eingriff der Feststellbremsanlage erforderliche Stufbarkeit der Feststellbremsventileinrichtung 22 wird durch eine pulsweitenmodulierte Ansteuerung derselben realisiert. Eine Ansteuerung erfolgt in vergleichbarer Weise, wie es bereits im Zusammenhang mit der Feststellbremsventileinrichtung 22 gemäß Figur 2 beschrieben wurde.

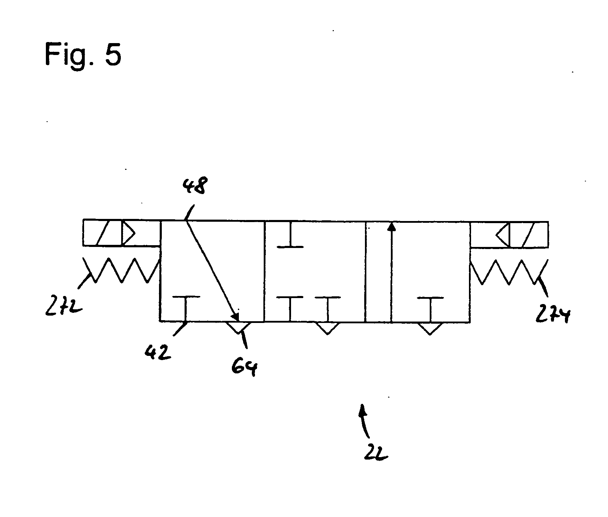

Figur 5 zeigt eine vierte Ausführungsform einer Feststellbremsventileinrichtung zur Verwendung in einer erfindungsgemäßen Bremsanlage. Die hier dargestellte Feststellbremseinrichtung 22 ist als 3/3-Wegeventil mit Federzentrierung ausgestaltet. Im stromlosen Fall sorgt die Kraft der Federn 272, 274 dafür, dass die mittlere Schaltstellung der Feststellbremsventileinrichtung 22 angenommen wird, das heißt alle Anschlüsse 42, 48, 64 werden voneinander getrennt. Folglich wird der Druck in einer an den Druckluftausgang 48 angeschlossenen Druckkammer 24 gehalten. Eine Entlüftung oder Belüftung der an den Druckluftausgang 48 angeschlossenen Druckkammer 24 erfolgt durch Bestromung des einen oder des anderen elektrischen Eingangs der Feststellbremsventileinrichtung 22. Bei der hier dargestellten Ausführungsform ist dafür zu sorgen, dass ein Druckverlust in der Druckkammer 24 des Federspeicherzylinders ausgeglichen wird, da ansonsten die Feststellbremse gespannt würde. Dies gelingt durch eine permanente Erfassung des Drucks im Bereich des Druckluftausgangs 48 beziehungsweise der Druckkammer 24 durch den Drucksensor 36 (siehe Figur 1), so dass im Bedarfsfall eine Belüftung der Druckkammer 24 erfolgen kann.

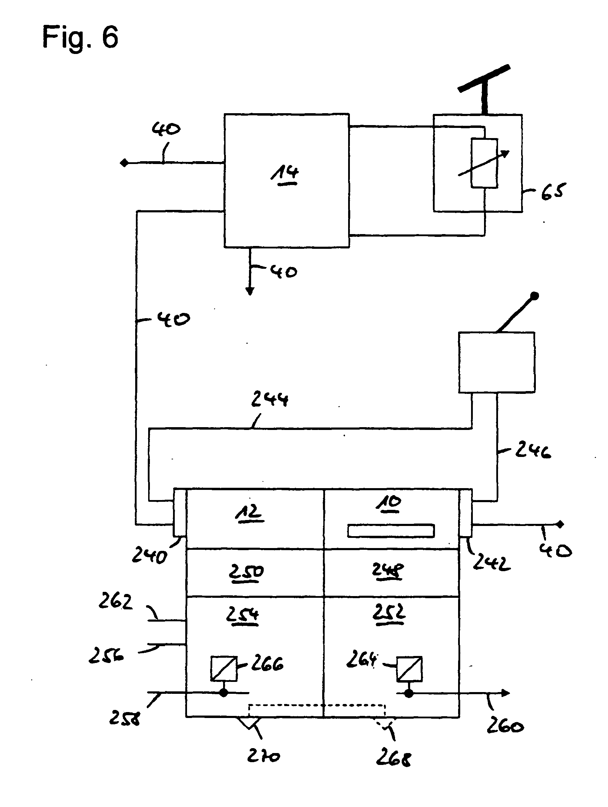

Figur 6 zeigt eine schematische Darstellung der Kopplung von Komponenten der Bremsanlage mit elektronischen Steuereinheiten. Hier wird eine mögliche Auslegung der elektrischen und elektronischen Aspekte der erfindungsgemäßen Bremsanlage erläutert. Das Fußbremsmodul 65 steht mit der elektronischen Steuereinheit 14 in Verbindung. Diese ist über den CAN-Bus 40 mit anderen nicht dargestellten Fahrzeugkomponenten verbunden und weiterhin insbesondere mit der elektronischen Steuereinheit 12 für das elektronische Bremssystem. Diese Verbindung der elektronischen Steuereinheit 14 mit der elektronischen Steuereinheit 12 für das elektronische Bremssystem erfolgt über einen ersten Stecker 240. Zusätzlich zur elektronischen Steuereinheit 12 für das elektronische Bremssystem ist eine elektronische Steuereinheit 10 für das Feststellbremssystem vorgesehen. Diese elektronischen Steuereinheiten können über eine direkte elektrische Schnittstelle miteinander in Verbindung stehen oder auch getrennt voneinander angeordnet sein und beispielsweise über den CAN-Bus elektrisch miteinander kommunizieren. Die elektronische Steuereinheit 10 für das elektronische Feststellbremssystem ist mit einem zweiten Stecker 242 ausgestattet. Dieser Stecker dient zum einen wiederum dem Anschluss an den CAN-Bus. Zum anderen sind der erste Stecker 240 und der zweite Stecker 242 für den Anschluss von jeweils einer mit der Handsteuereinheit 90 in Verbindung stehenden Signalleitung 244, 246 vorgesehen. Den elektronischen Steuereinheiten 10, 12 werden somit die Signale der Handsteuereinheit 90 redundant übermittelt, so dass im Falle eines defekten Steckers in jedem Fall eine Übermittlung der Signale an die elektronischen Steuereinheiten 10, 12 erfolgen kann. Auf diese Weise ist die Möglichkeit der Betätigung der Feststellbremseinrichtung sichergestellt, und ebenfalls kann eine Notbremsung auch bei Defekt eines Steckers über die Handsteuereinheit 90 eingeleitet werden. Die elektronische Steuereinheit 10 für das Feststellbremssystem umfasst zumindest Treiber für die anzusteuernden Magnetventile. An die elektronischen Steuereinheiten 10, 12 sind jeweils Mechatroniken und Magnetventile 248, 250 gekoppelt. Diese stehen mit pneumatischen Einheiten 252, 254 in Verbindung, die Druckluftanschlüsse 256, 258, 260, 262 und Drucksensoren 264, 266 aufweisen. Die pneumatischen Einheiten 252, 254 können getrennte Entlüftungen 268, 270 haben. Ebenfalls ist es möglich, dass eine gemeinsame Entlüftung 270 unter Vermittlung der pneumatischen Kopplung zwischen den pneumatischen Einheiten 252 verwendet wird, wobei dann die andere Entlüftung, beispielsweise Entlüftung 268 der pneumatischen Einheit 252, entbehrlich ist. Die elektronischen Steuereinheiten 10, 12 können vorzugsweise in ein elektropneumatisches Bremsmodul 38 (siehe Figur 1) integriert sein. Dann sind die Stecker 240, 242 am elektropneumatischen Bremsmodul 38 angeordnet.

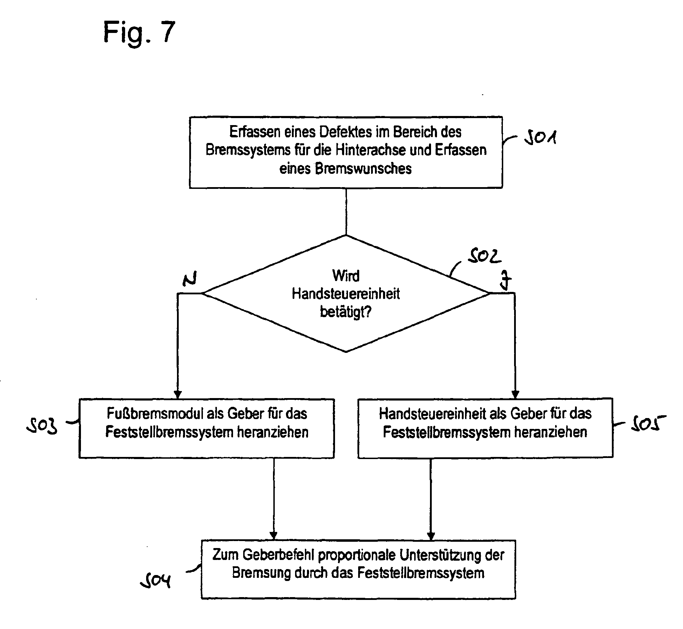

Figur 7 zeigt ein Flussdiagramm zur Erläuterung eines erfindungsgemäßen Verfahrens. In einem ersten Schritt S01 wird erfasst ob ein Defekt im Bereich des Bremssystems für die Hinterachse vorliegt, und es wird weiterhin festgestellt ob der Fahrer einen Bremswunsch äußert. Daraufhin wird in Schritt S02 geprüft, ob die Handsteuereinheit betätigt wird. Ist dies nicht der Fall, so wird gemäß Schritt S03 das Fußbremsmodul als Geber für das Feststellbremssystem herangezogen, so dass in Schritt S04 automatisch eine zum Geberbefehl proportionale Unterstützung der Bremsung durch das Feststellbremssystem erfolgt. Wird in Schritt S02 ermittelt, dass die Handsteuereinheit betätigt wird, so wird diese in Schritt S05 vorrangig vor dem Fußbremsmodul als Geber für das Feststellbremssystem herangezogen, wobei auch daraufhin gemäß Schritt S04 eine zum Geberbefehl proportionale Unterstützung der Bremsung durch das Feststellbremssystem erfolgt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Steuereinheit
- 12: Steuereinheit
- 14: Steuereinheit
- 16: erster Druckluftkreis
- 18: zweiter Druckluftkreis
- 20: Feststellbremszylinder
- 22: Feststellbremsventileinrichtung
- 24: Druckkammer
- 26: Betriebsbremszylinder
- 28: Druckufteingang
- 30: Anhängersteuerventil
- 32: Druckufteingang
- 34: elektrische Leitung
- 36: Drucksensor
- 38: elektropneumatisches Bremsmodul
- 40: CAN-Bus
- 42: Drucklufteingang
- 44: Rückschlagventil
- 46: Versorgungsausgang
- 48: Druckluftausgang
- 50: Feder
- 52: Zylinderkolben
- 54: Druckkammer
- 58: Steuereingang
- 60: Versorgungseingang
- 62: elektrischer Steuereingang
- 65: Fußbremsmodul
- 66: Elektronikmodul
- 68: Hinterachsmodul
- 70: Vorderachsmodul
- 72: Pedal
- 74: Versorgungsausgang
- 75: Versorgungsausgang
- 76: elektrischer Steuereingang
- 80: Bremssteuermodul
- 82: Versorgungsausgang
- 83: Versorgungsanschluss
- 84: Steueranschluss
- 90: Handsteuereinheit
- 100: Ventilgehäuse
- 102: Steuerkolbenplatte
- 104: Dichtung
- 106: Steuerraum
- 108: Steuerraum
- 110: Dichtung
- 112: Dichtung
- 114: Ventilsitz
- 116: Steuerkolben
- 118: Ventilteller
- 120: Feder
- 121: Kanal
- 122: Ventilsitz
- 124: Riegelmechanismus
- 126: Dichtung
- 128: Ausnehmung
- 130: Ausnehmung
- 132: Stift
- 134: Steuerleitung
- 136: Magnetventil
- 138: Steuerleitung
- 140: Magnetventil
- 142: Versorgungsleitung
- 144: Ventilgehäuse
- 146: Steuerkolbenplatte
- 148: Steuerkolben
- 150: Dichtung
- 152: Steuerraum
- 154: Ventilsitz
- 156: Ventilteller
- 158: Feder
- 160: Ventilsitz
- 162: Dichtung
- 164: Zylinder
- 166: Kanal
- 168: Steuerleitung
- 170: Magnetventil
- 172: Ventilsitz
- 174: Ventilsitz
- 176: Ventilteller
- 178: Ventilteller
- 180: Feder
- 182: Versorgungsleitung
- 184: Permanentmagnet
- 186: Permanentmagnet
- 188: Spule
- 190: Transistorschaltung
- 192: Entlüftung
- 194: Ventilsitz
- 196: Ventilteller
- 198: Ventilsitz
- 200: Ventilteller
- 202: Feder
- 204: Entlüftung
- 206: Ventilgehäuse
- 208: Steuerkolben
- 210: Steuerkolbenplatte
- 212: Steuerraum
- 214: Steuerraum
- 216: Dichtung
- 218: Verdickung
- 220: Verdickung
- 222: Verdickung
- 224: Dichtung
- 226: Dichtung
- 228: Dichtung
- 230: Ventilkammer
- 232: Ventilkammer
- 234: Ventilkammer
- 236: Steuerleitung
- 238: Steuerleitung
- 240: Stecker
- 242: Stecker
- 244: Signalleitung
- 246: Signalleitung
- 248: Mechatronik, Magnetventile
- 250: Mechatronik, Magnetventile
- 252: pneumatische Einheit
- 254: pneumatische Einheit
- 256: Druckluftanschluss
- 258: Druckluftanschluss
- 260: Druckluftanschluss
- 262: Druckluftanschluss
- 264: Drucksensor
- 266: Drucksensor
- 268: Entlüftung
- 270: Entlüftung
- 272: Feder
- 274: Feder

## Patentansprüche

1. Verfahren zum Steuern einer elektronischen Bremsanlage eines Nutzfahrzeugs, mit den Schritten:
- Erfassen eines Defektes durch eine erste elektronische Steuereinheit (12), die im Wesentlichen einem Betriebsbremssystem des Nutzfahrzeugs zugeordnet ist, und/oder durch eine zweite elektronische Steuereinheit (10), die im Wesentlichen einem Feststellbremssystem des Nutzfahrzeugs zugeordnet ist, wobei der Defekt zu einem mindestens teilweisen Ausfall der Betriebsbremswirkung an einer Achse, insbesondere Hinterachse, des Nutzfahrzeugs führt,
- Erfassen eines Bremswunsches durch eine zentrale elektronische Steuereinheit (14) auf der Grundlage einer Betätigung eines Gebers (72),
- Empfangen eines den Bremswunsch anzeigenden elektrischen Signals durch die zweite elektronische Steuereinheit (10),
- Ansteuern einer Feststellbremsventileinrichtung durch die zweite elektronische Steuereinheit (10), und
- Unterstützen der durch den Bremswunsch veranlassten Bremsung durch einen Federspeicherzylinder (20) des Feststellbremssystems,
**dadurch gekennzeichnet, dass** die erste elektronische Steuereinheit (12) und die zweite elektronische Steuereinheit (14) einander funktionell unterstützen, so dass Ausfälle der einen elektronischen Steuereinheit (12; 14) durch die andere elektronische Steuereinheit (14; 12) ausgeglichen werden können.

2. Verfahren nach Anspruch 1, **dadurch gekennzeichnet, dass** der Defekt einen Druckverlust im Bremskreis (16) der Achse bewirkt.

3. Verfahren nach Anspruch 1 oder 2, **dadurch gekennzeichnet, dass** der Defekt die erste elektronische Steuereinheit (12) betrifft.

4. Verfahren nach einem der vorangehenden Ansprüche, **dadurch gekennzeichnet, dass** der Geber ein Fußbremspedal (72) ist.

5. Verfahren nach einem der vorangehenden Ansprüche, **dadurch gekennzeichnet, dass** der Geber (72) ein erster Geber ist und ein zweiter Geber (90) vorgesehen ist, wobei bei Betätigung des zweiten Gebers dieser gegenüber dem ersten Geber einen vorrangigen Einfluss auf die Feststellbremsventileinrichtung hat.

6. Verfahren nach einem der vorangehenden Ansprüche, **dadurch gekennzeichnet, dass** der Druckverlauf des die Bremskraft des Federspeicherzylinders (20) steuernden Drucks von der Betätigung eines Gebers (72, 90) abhängt.

7. Verfahren nach einem der vorangehenden Ansprüche, **dadurch gekennzeichnet, dass** die erste und die zweite elektronische Steuereinheit (10, 12) in ein elektropneumatisches Bremsmodul (38) für die Achse integriert sind.

8. Verfahren nach Anspruch 7, **dadurch gekennzeichnet,**
**dass** das elektropneumatische Bremsmodul (38) bei fehlerfreiem Betrieb des Bremssystems elektrisch durch die zentrale elektronische Steuereinheit (14) angesteuert wird.

9. Verfahren nach Anspruch 8, **dadurch gekennzeichnet,**
**dass** das elektropneumatische Bremsmodul (38) zusätzlich pneumatisch angesteuert wird.

10. Verfahren nach einem der vorangehenden Ansprüche, **dadurch gekennzeichnet, dass** ein Anhängersteuerventil (30) vorgesehen ist, das einen mit einem elektronischen Steuergerät (14) verbundenen elektrischen Steuereingang (76) aufweist, über den eine Entlüftung der Anhängerbremsanlage zum Zwecke einer Testfunktion veranlasst wird.

11. Bremsanlage für ein Nutzfahrzeug mit
- einer ersten elektronischen Steuereinheit (12), die im Wesentlichen einem Betriebsbremssystem des Nutzfahrzeugs zugeordnet ist, und einer zweiten elektronischen Steuereinheit (10), die im Wesentlichen einem Feststellbremssystem des Nutzfahrzeugs zugeordnet ist, zum Erfassen eines Defektes durch die erste elektronische Steuert einheit und/oder durch die zweite elektronische Steuereinheit, wobei der Defekt zu einem mindestens teilwei sen Ausfall der Betriebsbremswirkung an einer Achse, insbesondere Hinterachse, des Nutzfahrzeugs führt,
- einem Geber (72), über dessen Betätigung ein Bremswunsch durch eine zentrale elektronische Steuereinheit (14) erfassbar ist, und
- wobei die zweite elektronische Steuereinheit (10) dazu geeignet ist, ein den Bremswunsch anzeigendes elektrisches Signals zu empfangen und eine Feststellbremsventileinrichtung (22) anzusteuern und wobei eine durch den Bremswunsch veranlasste Bremsung durch einen Federspeicherzylinder (20) des Feststellbremssystems unterstützt werden kann,
**dadurch gekennzeichnet, dass** die erste elektronische Steuereinheit (12) und die zweite elektronische Steuereinheit (14) dazu ausgelegt sind, einander funktionell zu unterstützen, so dass Ausfälle der einen elektronischen Steuereinheit (12; 14) durch die andere Steuereinheit (14;12) ausgeglichen werden können.

12. Bremsanlage nach Anspruch 11, **dadurch gekennzeichnet, dass** der Defekt einen Druckverlust im Bremskreis der Achse bewirkt.

13. Bremsanlage nach Anspruch 11 oder 12, **dadurch gekennzeichnet, dass** der Defekt die erste elektronische Steuereinheit (12) betrifft.

14. Bremsanlage nach einem der Ansprüche 11 bis 13, **dadurch gekennzeichnet, dass** der Geber ein Fußbremspedal (72) ist.

15. Bremsanlage nach einem der Ansprüche 11 bis 14, **dadurch gekennzeichnet, dass** der Geber (72) ein erster Geber ist und ein zweiter Geber (90) vorgesehen ist, wobei bei Betätigung des zweiten Gebers dieser gegenüber dem ersten Geber einen vorrangigen Einfluss auf die Feststellbremsventileinrichtung hat.

16. Bremsanlage nach einem der Ansprüche 11 bis 15, **dadurch gekennzeichnet, dass** der Druckverlauf des die Bremskraft des Federspeicherzylinders (20) steuernden Drucks von der Betätigung eines Gebers (72, 90) abhängt.

17. Bremsanlage nach einem der Ansprüche 11 bis 16, **dadurch gekennzeichnet, dass** die erste und die zweite elektronische Steuereinheit (10, 12) in ein elektropneumatisches Bremsmodul (38) für die Achse integriert sind.

18. Bremsanlage nach Anspruch 17, **dadurch gekennzeichnet, dass** das elektropneumatische Bremsmodul (38) bei fehlerfreiem Betrieb des Bremssystems elektrisch durch die zentrale elektronische Steuereinheit (14) ansteuerbar ist.

19. Bremsanlage nach Anspruch 18, **dadurch gekennzeichnet, dass** das elektropneumatische Bremsmodul (38) zusätzlich pneumatisch ansteuerbar ist.

20. Verfahren nach einem der Ansprüche 11 bis 19, **dadurch gekennzeichnet, dass** ein Anhängersteuerventil (30) vorgesehen ist, das einen mit einem elektronischen Steuergerät (14) verbundenen elektrischen Steuereingang (76) aufweist, über den eine Entlüftung der Anhängerbremsanlage zum Zwecke einer Testfunktion veranlassbar ist.

## Claims

1. Method of controlling an electronic braking system of a commercial vehicle, comprising the following steps:
- detecting a malfunction by means of a first electronic control unit (12) that is substantially associated with a service brake system of the commercial vehicle, and/or by means of a second electronic control unit (10) that is substantially associated with a parking brake system of the commercial vehicle, wherein the malfunction results in an at least partial failure of the service brake effect on one axle, in particular the rear axle, of the commercial vehicle,
- detecting a brake application request by means of a central electronic control unit (14) on the basis of a confirmation of a transmitter (72),
- receiving an electrical signal indicating said brake application request by means of said second electronic control unit (10),
- controlling a parking brake valve means by means of said second electronic control unit (10) and
- supporting the brake application operation induced by said brake application request by means of a spring brake cylinder (20) of said parking brake system
**characterised in that** said first electronic control unit (12) and said second electronic control unit (14) assist each other in functional terms so that failure of one of said electronic control units (12; 14) can be compensated by the respective other electronic control unit (14; 12).

2. Method according to Claim 1, **characterised in that** the malfunction causes pressure loss in the brake circuit (16) of the axle.

3. Method according to Claim 1 or 2, **characterised in that** the malfunction affects said first electronic control unit (12).

4. Method according to any of the preceding Claims, **characterised in that** said transmitter is a brake pedal (72).

5. Method according to any of the preceding Claims, **characterised in that** said transmitter (72) is a first transmitter and that a second transmitter (90) is provided, with said second transmitter having priority over said first transmitter in taking influence on said parking brake valve means when said second transmitter is actuated.

6. Method according to any of the preceding Claims, **characterised in that** the pressure development of the pressure controlling the braking force of said spring brake cylinder (20) is a function of the actuation of a transmitter (72, 90).

7. Method according to any of the preceding Claims, **characterised in that** said first and second electronic control units (10, 12) are integrated into an electro-pneumatic brake module (38) for the axle.

8. Method according to Claim 7, **characterised in that** in the event of faultless operation of the braking system, said electro-pneumatic brake module (38) is electrically controlled by said central electronic control unit (14).

9. Method according to Claim 8, **characterised in that** said electro-pneumatic brake module (38) is additionally controlled in a pneumatic mode.

10. Method according to any of the preceding Claims, **characterised in that** a trailer control valve (30) is provided that comprises an electrical control input (76) connected to an electronic controller (14), via which venting of the trailer brake system is induced for the purpose of a testing function.

11. Braking system for a commercial vehicle, comprising
- a first electronic control unit (12) associated substantially with a service brake system of said commercial vehicle, and a second electronic control unit (10) that is substantially associated with a parking brake system of said commercial vehicle, for detecting a malfunction by means of said first electronic control unit and/or by means of said second electronic control unit, with said malfunction resulting in an at least partial failure of the service brake action on an axle, in particular the rear axle, of said commercial vehicle,
- a transmitter (72) which when actuated permits the detection of a brake application request by a central electronic control unit (14), and
- wherein said second electronic control unit (10) is suitable to receive an electrical signal indicating the brake application request and to control a parking brake valve means (22), and wherein a brake application operation induced by said brake application request may be assisted by a spring brake cylinder (20) of said parking brake system,
**characterised in that** said first electronic control unit (12) and said second electronic control unit (14) are designed for assisting each other in terms of function such that failure of one of said electronic control units (12; 14) may be compensated by the respective other control unit (14; 12).

12. Braking system according to Claim 11, **characterised in that** the malfunction induces a pressure loss in the brake circuit of the axle.

13. Braking system according to Claim 11 or 12, **characterised in that** the malfunction affects said first electronic control unit (12).

14. Braking system according to any of the Claims 11 to 13, **characterised in that** said transmitter is a brake pedal (72).

15. Braking system according to any of the Claims 11 to 14, **characterised in that** said transmitter (72) is a first transmitter and that a second transmitter (90) is provided, with said second transmitter having priority over said first transmitter in taking influence on said parking brake valve means when said second transmitter is actuated.

16. Braking system according to any of the Claims 11 to 15, **characterised in that** the pressure development of the pressure controlling the braking force of said spring brake cylinder (20) is a function of the actuation of a transmitter (72, 90).

17. Braking system according to any of the Claims 11 to 16, **characterised in that** said first and second electronic control units (10, 12) are integrated into an electro-pneumatic brake module (38) for the axle.

18. Braking system according to Claim 17, **characterised in that** in the event of faultless operation of the braking system, said electro-pneumatic brake module (38) is electrically controlled by said central electronic control unit (14).

19. Braking system according to Claim 18, **characterised in that** said electro-pneumatic brake module (38) is adapted for additional control in a pneumatic mode.

20. Braking system according to any of the Claims 11 to 19, **characterised in that** that a trailer control valve (30) is provided that comprises an electrical control input (76) connected to an electronic controller (14), via which venting of the trailer brake system is induced for the purpose of a testing function.

## Revendications

1. Procédé de commande d'une installation électronique de freinage d'un véhicule automobile, comprenant les stades dans lesquels :
- on détecte un défaut par une première unité (12) électronique de commande, qui est associée essentiellement à un système de frein de service du véhicule utilitaire, et/ou par une deuxième unité (10) électronique de commande, qui est associée essentiellement à un système de frein de stationnement du véhicule utilitaire, le défaut entraînant une défaillance, au moins partielle, de l'effet du frein de service sur un essieu, notamment sur l'essieu arrière, du véhicule utilitaire,
- on détecte un souhait de freinage par une unité (14) électronique centrale de commande sur la base d'un actionnement d'un transmetteur (72),
- on reçoit un signal électrique indiquant le souhait de freinage par la deuxième unité (10) électronique de commande,
- on commande le dispositif de vanne de frein de stationnement par la deuxième unité (10) électronique de commande, et
- on assiste le freinage provoqué par le souhait de freinage par un cylindre (20) à ressort accumulateur du système de frein de stationnement,
**caractérisé en ce que** la première unité (12) électronique de commande et la deuxième unité (14) électronique de commande s'assistent fonctionnellement l'une l'autre, de manière à pouvoir compenser des défaillances de l'une des unités (12; 14) électroniques de commande par l'autre unité (14; 12) électronique de commande.

2. Procédé suivant la revendication 1, **caractérisé en ce que** le défaut provoque une perte de pression dans le circuit (16) de frein de l'essieu.

3. Procédé suivant la revendication 1 ou 2, **caractérisé en ce que** le défaut concerne la première unité (12) électronique de commande.

4. Procédé suivant l'une des revendications précédentes, **caractérisé en ce que** le transmetteur (72) est une pédale (72) de frein à pied.

5. Procédé suivant l'une des revendications précédentes, **caractérisé en ce que** le transmetteur (72) est un premier transmetteur et il est prévu un deuxième transmetteur (90), dans lequel, lors de l'actionnement du deuxième transmetteur, celui-ci a, par rapport au premier transmetteur, une influence prioritaire sur le dispositif de vanne de frein de stationnement.

6. Procédé suivant l'une des revendications précédentes, **caractérisé en ce que** la courbe de la pression commandant la force de frein du cylindre (20) à ressort accumulateur dépend de l'actionnement d'un transmetteur (72, 90).

7. Procédé suivant l'une des revendications précédentes, **caractérisé en ce que** la première et la deuxième unités (10, 12) électroniques de commande sont intégrées dans un module (38) électropneumatique de frein de l'essieu.

8. Procédé suivant la revendication 7, **caractérisé en ce que** le module (38) électropneumatique de frein est commandé, lors d'un fonctionnement sans défaut du système de frein, électriquement par l'unité (14) électronique centrale de commande.

9. Procédé suivant la revendication 8, **caractérisé en ce que** le module (38) électropneumatique de frein est commandé, en outre, pneumatiquement.

10. Procédé suivant l'une des revendications précédentes, **caractérisé en ce qu'**il est prévu une vanne (30) de commande de remorque, qui a une entrée (76) électrique de commande reliée à un appareil (14) électronique de commande, entrée par laquelle une mise à l'atmosphère de l'installation de frein de la remorque est provoquée en vue d'une fonction de test.

11. Installation de freinage d'un véhicule utilitaire, comprenant
- une première unité (12) électronique de commande, qui est associée essentiellement à un système de frein de service du véhicule utilitaire, et une deuxième unité (10) électronique de commande, qui est associée essentiellement à un système de frein de stationnement du véhicule utilitaire, pour la détection d'un défaut par la première unité électronique de commande et/ou par la deuxième unité électronique de commande, le défaut entraînant une défaillance, au moins en partie, de l'effet de frein de service sur un essieu, notamment sur l'essieu arrière, du véhicule utilitaire,
- un transmetteur (72), par l'actionnement duquel un souhait de frein peut être détecté par une unité (14) électronique centrale de commande, et
- dans laquelle la deuxième unité (10) électronique de commande est propre à recevoir un signal électrique indiquant le souhait de freinage et à commander un dispositif (22) de vanne de frein de stationnement et dans laquelle un freinage provoqué par le souhait de freinage peut être assisté par un cylindre (20) à ressort accumulateur du système de frein de stationnement,
**caractérisée en ce que** la première unité (12) électronique de commande et la deuxième unité (14) électronique de commande sont conçues pour s'assister fonctionnellement l'une l'autre, de manière à pouvoir compenser des défaillances de l'une des unités (12; 14) électroniques de commande par l'autre unité (14; 12) de commande.

12. Installation de freinage suivant la revendication 11, **caractérisée en ce que** le défaut provoque une perte de pression dans le circuit (16) de frein de l'essieu.

13. Installation de freinage suivant la revendication 11 ou 12, **caractérisée en ce que** le défaut concerne la première unité (12) électronique de commande.

14. Installation de freinage suivant l'une des revendications 11 à 13, **caractérisée en ce que** le transmetteur (72) est une pédale (72) de frein à pied.

15. Installation de freinage suivant l'une des revendications 11 à 14, **caractérisée en ce que** le transmetteur (72) est un premier transmetteur et il est prévu un deuxième transmetteur (90), dans lequel, lors de l'actionnement du deuxième transmetteur, celui-ci a, par rapport au premier transmetteur, une influence prioritaire sur le dispositif de vanne de frein de stationnement.

16. Installation de freinage suivant l'une des revendications 11 à 15, **caractérisée en ce que** la courbe de la pression commandant la force de frein du cylindre (20) à ressort accumulateur dépend de l'actionnement d'un transmetteur (72, 90).

17. Installation de freinage suivant l'une des revendications 11 à 16, **caractérisée en ce que** la première et la deuxième unités (10, 12) électroniques de commande sont intégrées dans un module (38) électropneumatique de frein de l'essieu.

18. Installation de freinage suivant la revendication 17, **caractérisée en ce que** le module (18) électropneumatique de frein peut, lors d'un fonctionnement sans défaut du système de frein, être commandé électriquement par l'unité (14) électronique centrale de commande.

19. Installation de freinage suivant la revendication 18, **caractérisée en ce que** le module (38) électropneumatique de frein peut être commandé, en outre, pneumatiquement.

20. Procédé suivant l'une des revendications 11 à 19, **caractérisé en ce qu'**il est prévu une vanne (30) de commande de remorque, qui a une entrée (76) électrique de commande reliée à un appareil (14) électronique de commande, entrée par laquelle une mise à l'atmosphère de l'installation de frein de remorque peut être provoquée en vue d'une fonction de test.
